# EUROPÄISCHE PATENTSCHRIFT

(11) **EP 0 819 694 B1**
(45) Veröffentlichungstag und Bekanntmachung des Hinweises auf die Patenterteilung: **02.10.2002**
(21) Anmeldenummer: 97110969.9
(22) Anmeldetag: 02.07.1997
(51) Int. Cl.: C07F 7/18, C08K 5/54, C08L 21/00

(54) **Gemische von Organilanpolysulfanen und ein Verfahren zur Herstellung von diese Gemische enthaltenden Kautschukmischungen**
Mixtures of organo-polysulfanes and process for the preparation of rubber mixtures containing them
Compositions de organopolysulfanes et procédé de préparation de compositions de caoutchouc les contenant

(30) Priorität: 18.07.1996 DE 19628904; 22.01.1997 DE 19702046
(43) Veröffentlichungstag der Anmeldung: 21.01.1998
(73) Patentinhaber: Degussa AG, 40474 Düsseldorf (DE)
(72) Erfinder: Görl, Udo, Dr., 53332 Bornheim-Roisdorf (DE); Lambertz, Horst, 50354 Hürth (DE)

(56) Entgegenhaltungen:
- EP-A- 0 191 929
- DE-A- 2 856 229
- US-A- 4 709 065
- US-A- 5 466 848
- DATABASE WPI Week 9543 Derwent Publications Ltd., London, GB; AN 95332519 XP002084180 & JP 07 228588 A (SHINETSU CHEM IND CO LTD), 29. August 1995

## Beschreibung

Die Erfindung betrifft Gemische von Organosilanpolysulfanen mit einem hohen Anteil an Disulfanen und ein Verfahren zur Herstellung von diese Verbindungen enthaltenden Kautschukmischungen.

Einsparungen im Kraftstoffverbrauch und eine Reduzierung des Schadstoffausstoßes bekommen heute mit zunehmendem Umweltbewußtsein eine wachsende Priorität [1,2]. Für den Reifenhersteller bedeutet dies, Reifen zu entwickeln, die sich durch einen sehr niedrigen Rollwiderstand bei exzellenter Naßrutschfestigkeit und guten Abriebwiderstand auszeichnen.

In zahlreichen Veröffentlichungen und Patenten werden Vorschläge gemacht, den Rollwiderstand eines Reifens und damit den Kraftstoffverbrauch zu senken. Genannt werden hierbei die Reduzierung des Rußgehaltes in der Mischung sowie die Verwendung spezieller Ruße (US-A-4,866,131, US-A-4,894,420). Keiner dieser Lösungsvorschläge führte jedoch zu einer befriedigenden Balance zwischen dem zu erzielenden niedrigen Rollwiderstand und den ebenfalls wichtigen Reifeneigenschaften wie Naßrutschfestigkeit und Abriebwiderstand.
Erst die Verwendung von hochaktiven Kieselsäurefüllstoffen in Kombination mit dem Organosilan Bis(triethoxysilylpropyl)tetrasulfan (TESPT) im weitgehenden Austausch des Rußes durch Kieselsäure in der Kautschukmischung zeigt einen Weg auf, der die Herstellung eines Reifens mit gegenüber den Standardreifen deutlich reduziertem Rollwiderstand unter gleichzeitiger Beibehaltung oder sogar Verbesserung der beiden weiteren obengenannten Reifeneigenschaften ermöglicht [3,4,5,6].

Anläßlich des ACS-Meetings 1986 in New York stellte S. Wolff [7] dar, daß es durch den Einsatz von Kieselsäure in Kombination mit TESPT sowohl in einer PKW-Lauffläche auf Basis Emulsions-Styrol-Butadien-Kautschuk (E-SBR) als auch in einer LKW-Lauffläche auf Basis Naturkautschuk gelingt, den Rollwiderstand gegenüber der rußgefüllten Standardmischung bei weitgehendem Erhalt der Naßrutschfestigkeit deutlich zu reduzieren.

Eine weitere Optimierung dieses Systems hinsichtlich aller drei Eigenschaften gelang durch die Verwendung spezieller Styrol-Butadien-Polymere, hergestellt nach dem Lösungspolymerisationsverfahren (EP-A-0 447 066 A1), teilweise im Blend mit anderen Polymeren, insbesondere Polybutadien und zusätzliche Verwendung neuer Kieselsäuretypen (US -A-5,227,425) sowie speziell auf diesen Einsatz zugeschnittenen Polymerblends (EP-A-0 620 250 A1) mit zum Teil drei bis vier unterschiedlichen Ausgangspolymeren [8,9].

In allen Veröffentlichungen und Patenten wird beschrieben, daß zur Erzielung eines niedrigerenn Rollwiderstandes bei Erhalt bzw. Verbesserung von Naßrutschfestigkeit und Abriebwiderstand ein großer Teil bzw. der gesamte Gehalt des normalerweise verwendeten Rußfüllstoffes durch eine hochaktive Kieselsäure ersetzt werden muß [7,9]. Dieser Austausch führt jedoch nur dann zu dem erwünschten Ziel, wenn man das Organosilan Bis(triethoxysilylpropyl)tetrasulfan (TESPT) als "Coupling Agent" zwischen Kieselsäure und Polymer eingesetzt.

Nun ist bekannt [10,11], daß das Wertebild, das sich bei der Verwendung von Organosilanen in Kautschukmischungen erzielen läßt, auf zwei unabhängig voneinander ablaufende Reaktionen beruht. Zum einen kommt es während der Mischungsherstellung, bevorzugt in der 1. Mischstufe, bei hohen Temperaturen zu einer Reaktion zwischen den Silanolgruppen der Kieselsäure und den Trialkoxysilylgruppen des Silans unter Alkoholabspaltung (Hydrophobierungs- oder Modifizierungsreaktion). Die vollständige Umsetzung ist für das spätere Wertebild von entscheidender Bedeutung. Sie läuft, wie alle chemischen Reaktionen bei hohen Temperaturen schneller ab [12]., so daß der Gummicompounder, mit dem Wunsch nach kurzen Mischzeiten, die Mischungstemperatur möglichst hoch ansetzen möchte. Er wird jedoch in diesem Bestreben gebremst durch die Tatsache, daß die zweite, sogenannte kautschukreaktive Gruppe des TESPT aus einer im statistischen Mittel Tetrasulfangruppe mit bedeutenden Anteilen höherer Sulfanketten (S₅ - S₈) besteht [11].

Diese kautschukreaktive Gruppe führt nach allgemeiner Auffassung zum Aufbau einer sogenannten Füllstoff/-Kautschuk-Bindung, die das gummitechnische Wertebild des Fertigartikels (z.B. Reifen) bestimmt. Diese Reaktion, während der Vulkanisation gewünscht, wird durch die Thermolabilität der Tetrasulfangruppe und höherer Sulfaneinheiten beeinflußt. Sie macht jedoch große Probleme - wie die Praxis zeigt -, wenn sie bereits während der Herstellung der Rohmischung auftritt, während der normalerweise nur die Reaktion zwischen Füllstoff und Silan stattfinden soll.

Kommt es zur Abspaltung von Schwefel aus den langkettigen Sulfaneinheiten, wird dieser in die Polymerkette eingebaut. Das bewirkt dann die sogenannte Vorvernetzung mit dem Resultat, daß das Mischungsfell verstrammt, was bis zur Unverarbeitbarkeit der Rohmischung führen kann.
Meßbar ist die Vorvernetzung durch die Bestimmung der Mischungsviskosität.
In der EP-A1-0732 362, die nicht vorveröffentlicht ist, wird die Verwendung von Organosilandisulfiden in Kautschukmischungen beschrieben.
Diese Verbindungen müssen jedoch sehr rein sein bzw. einen Disulfidgehalt von mindestens 80 % aufweisen.

Aufgabe der Erfindung ist es, Gemische von Organosilanpolysulfanen bereitzustellen, die bei den erhöhten Temperaturen, wie sie bei der Herstellung von Kautschukrohmischungen, d. h. vulkanisierbaren Kautschukmischungen, in denen der zur Vulkanisation noch notwendige Schwefel und der/die Beschleuniger noch fehlen, auftreten können, nicht zu einer Vorvernetzung führen.

Gegenstand der Erfindung sind Gemische von Polysulfanen, die diese Aufgabe erfüllen.
Dabei handelt es sich um Gemische aus Organosilanpolysulfanen gemäß der allgemeinen Formel

(RO)₃Si(CH₂)ₓ S-S_{z} - S (CH₂)ₓ Si(OR)₃ (I)

in der bedeuten:
- R =: Alkyl, geradkettig oder verzweigt mit 1-8 C-Atomen, insbesondere 1 - 3 C-Atomen
- x:=: eine ganze Zahl von 1-8
- z:=: 0 bis 6,
wobei die Summe der Anteile an Organosilanpolysulfanen, in denen z = 0 und z = 1 ist, sich auf ≥ 80 % (Gew.) beläuft, mit der Maßgabe, daß der Anteil der Verbindung, in der z = 0 ist, unter 80 % bleibt, und der Anteil der Organosilanpolysulfane, in denen z eine ganze Zahl von 2 bis 6 bedeutet, in den Gemischen 20 % nicht überschreitet.

Letzteres ist auch auszudrücken durch einen Gehalt von ≤ 20 % (Gew.)und bildet ein entscheidendes Kennzeichen. Polysulfananteile mit z = 7 oder 8 sind in den erfindungsgemäßen Gemischen im allgemeinen nicht zu finden. In Ausnahmefällen handelt es sich um Gehalte < 1 %, z. B. in Form von Verunreinigungen, die keine Auswirkung auf die Anwendung der erfindungsgemäßen Gemische haben.

Die Summe der Bestandteile muß natürlich immer 100 % ergeben, gegebenenfalls unter Berücksichtigung von Verbindungen mit z = 7;8.

Besonders geeignet sind solche, die Anteile der Organosilanpolysulfane folgende Werte annehmen:
- z = 0: ca. 58 bis < 80 %
- z = 1: > 0 bis ca. 32 %, wobei die Summe dieser beiden Verbindungen ≥ 80 % beträgt, und
- z = 2: bis 6 ≤ 20 %, insbesondere < ca. 11 %.

Die erfindungsgemäßen Gemische finden Einsatz bei der Herstellung vulkanisierbarer Kautschukmischungen, insbesondere für Reifen. Bei den dort eingesetzten Polymeren, handelt es sich um natürliche und synthetische Elastomere, ölgestreckt oder nicht, als Einzelpolymer oder im Verschnitt mit anderen Kautschuken wie zum Beispiel Naturkautschuken, Butadienkautschuken, Isoprenkautschuken, Butadien-Styrol-Kautschuken, insbesondere aber SBR, hergestellt nach dem Lösungspolymerisationsverfahren oder dem Emulsionsverfahren.

Der Begriff Gemisch ist so zu verstehen, daß einerseits Mischungen aus einem reinen Polysulfan gemäß Formel (I) mit x = 0 und anderen Polysulfanen, in denen x ≠ 0, aber Anspruch 1 gerecht wird, hergestellt werden können.

Andererseits ist es jedoch auch möglich, mit Hilfe eines geeigneten Herstellverfahrens direkt oder unter Zumischung anderer Polysulfane zu den erfindungsgemäßen Gemischen zu gelangen.

Verwendung finden die erfindungsgemäßen Gemische vor allem in Laufflächenmischungen mit hohem Kieselsäureanteil, wie sie z.B. in der EP-A1- 0447 066 und der EP-A- 0620 250 beschrieben werden.

Unter Verwendung der erfindungsgemäßen Gemische hergestellten Kautschukmischungen werden in der Regel mit Schwefel und/oder Schwefelspendern und Beschleuniger (Vulkanisationshilfsmittel)vernetzt, wobei die Schwefelmenge in der Regel zwischen 0,1 und 4 phr liegt.

Sie enthalten neben den Polymeren und den in der Praxis üblichen Zusatzstoffen wie Aktivatoren, Alterungsschutzstoffe, Verarbeitungshilfsmittel, gegebenenfalls Ruß und auch natürliche, helle Füllstoffe,auf jeden Fall aber hochaktive Kieselsäurefüllstoffe in Mengen von 10 bis 200 Teilen, insbesondere 25 bis 80 Teile, bezogen auf 100 Teile des Polymer.
Diese Füllstoffe sind dadurch gekennzeichnet, daß sie BET-Oberflächen von 1 bis 700 m²/g, insbesondere 100 bis 250 m²/g, und darüber hinaus eine DBP-Zahl von 150 bis 300 ml/100g besitzen. Als Darreichungsform eignen sich hierbei Pulver aber auch staubarme Formen wie Granulate und Mikroperlen.
Die Menge der erfindungsgemäßen Gemische liegt dabei zwischen 0,5 und 30 Teilen, bezogen auf 100 Teile Füllstoff.In bevorzugten Anwendungen wie z. B. Laufflächenmischungen mit hohen Kieselsäureanteilen, in denen in der Regel Kieselsäuren mit 100 bis 250 m²/g Einsatz finden, werden Mengen zwischen 4 und 10 Teilen der erfindungsgemäßen Gemische, bezogen auf 100 Teile des Füllstoffs eingesetzt.

Die erfindungsgemäßen Gemische können dabei der Mischung *in situ* oder, zur besseren Darreichungsform, vorab mit Ruß vermischt zugeführt werden. Auch eine Vormodifizierung der als Füllstoff verwendeten Kieselsäure, wie sie zum Beispiel in DE 196 09619.7 beschrieben wird, ist möglich.

Dem Verfahren zur Herstellung von hochkieselsäuregefüllten Mischungen in Kombination mit Organosilanen, ist ein besonderes Augenmerk zu widmen. Ein geeignetes Verfahren wird in der Anmeldung EP-A-0 447 066 A1 beschrieben, wobei es jedoch wegen des Einsatzes von TESPT dort notwendig ist, die Temperatur bei der Mischungsherstellung nicht über 160 ° C ansteigen zu lassen, was, um die weiter vorne beschriebene Vorvernetzung nicht auszulösen. Bei Verwendung der erfindungsgemäßen Verbindungen sind jedoch auch Temperaturen von 160 bis 200 °C, insbesondere 175 bis 190 °C, möglich, ohne daß dieser störende Effekt auftritt. Der Compounder kann daher höhere Temperaturen wählen und hierdurch die Reaktion zwischen Kieselsäure und Silan beschleunigen, d.h. die Mischzeit und/oder die Anzahl der Mischstufen reduzieren. Er ist somit weitgehend frei in der Wahl seiner Mischbedingungen.

Die erfindungsgemäßen Gemische können in nahezu allen Gummiartikeln angewandt werden. Sie sind besonders geeignet für den Einsatz hochkieselsäuregefüllten Mischungen (Gehalt >.40.Teile SiO₂),bezogen auf 100 Teile Kautschuk insbesondere Reifenlaufflächenmischungen, in denen in der Regel hohe Silanmengen zur Erzielung des geforderten Wertebildes eingesetzt werden müssen.

Die beschriebenen Kautschukmischungen sind ebenso wie das Verfahren zur Herstellung Gegenstand der Erfindung.

Das Verfahren zur Herstellung von mit Schwefel und/oder Schwefelspendern und Beschleuniger(n) vulkanisierten Kautschukmischungen, enthaltend einen oder mehrere natürliche oder künstliche Kautschuke, helle oxidische (silikatische) Füllstoffe, sowie gegebenenfalls Ruß und weitere übliche Bestandteile, ist dadurch gekennzeichnet, daß man die Kautschukkomponente(n), die Gemische gemäß den Ansprüchen 1, 2 oder 3, den silikatischen Füllstoff und gegebenenfals vorhandenen Ruß, sowie gegebenenfalls einen Weichmacher, Alterungsschutzmittel und Aktivatoren in einem Knetgerät, gegebenenfals einem Banburry-Innenmischer bei einer Temperatur von 160 bis 200 ° C, insbesondere 175 bis 190 °, 3 bis 15 Minuten lang in einer Stufe oder mehrstufig knetet, anschließend bei 60 bis 120 ° C, bevorzugt bei 80 bis 110 ° C , Vulkanisationsmittel, entweder im Banburry-Innenmischer oder auf einer Mischwalze hinzufügt, im genannten Temperaturbereich weitere 2 bis 10 Minuten mischt und die fertige Kautschukmischung anschließend als Kautschukfell oder in Form von Streifen abzieht.

Die vorliegende Erfindung betrifft somit auch den Einsatz von Organosilanpolysulfangemischen, deren Sulfankettenverteilung so gewählt wurde, daß selbst bei Temperaturen von 160 bis 200 °C, insbesondere 175 bis 190 ° C, keine Vorvernetzung der Rohmischung erkennbar wird.
In der Praxis läßt sich diese Vorvernetzung anhand der Eigenschaften des Rohmischungsfells beurteilen, das bei eintretender Vorvernetzung an Rauhig- und Krümeligkeit zunimmt und oft nicht mehr auf der Walze verarbeitet werden kann. Im Labor läßt sich diese Vorvernetzung durch eine Messung der Mischungsviskosität sowie durch eine Bestimmung des Minimum Torque-Wertes der Rohmischung bei der Rheometerprüfung nachweisen. Man kann hierbei als Richtwert eine Erhöhung der Viskosität gegenüber einer bei niedriger Temperatur (= sicheres Verarbeitungsverhalten) gemischten Formulierung um mehr als 5, insbesondere mehr als 10 Mooney-Einheiten, als ein Maß für eine Vorvernetzung der Mischung ansetzen.

Ein weiteres Verfahren zur Herstellung von mit Schwefel und/oder Schwefelspendern und Beschleuniger(n) vulkanisierten Kautschukmischungen, enthaltend einen oder mehrere natürliche oder künstliche Kautschuke, helle oxidische (silikatische) Füllstoffe, sowie gegebenenfalls Ruß und weitere übliche Bestandteile, ist dadurch gekennzeichnet, daß man die Kautschukkomponente(n), die Gemische gemäß der allgemeinen Formel

(RO)₃Si(CH₂)ₓ S-S_{z} - S (CH₂)ₓ Si(OR)₃

in der bedeuten
R = Alkyl, geradkettig oder verzweigt mit 1-8 C-Atomen, insbesondere 1 - 3 C-Atomen
x:= eine ganze Zahl von 1-8
z:= 0 bis 6,
wobei der Anteil der Polysulfane, bei denen z eine ganze Zahl von 2 bis 6 bedeutet, den Anteil von 20 Gew.-% in dem Gemisch nicht überschreitet, und der Anteil der Polysulfane mit z = 0 einen Wert ≥ 80 Gew.-% erreicht, den silikatischen Füllstoff und gegebenenfals vorhandenen Ruß, sowie gegebenenfalls einen Weichmacher, Alterungsschutzmittel und Aktivatoren in einem Knetgerät, gegebenenfals einem Banburry-Innenmischer bei einer Temperatur von 160 bis 200 ° C, insbesondere 175 bis 190 °, 3 bis 15 Minuten lang in einer Stufe oder mehrstufig knetet, anschließend bei 60 bis 120 ° C, bevorzugt bei 80 bis 110 ° C , Vulkanisationsmittel, entweder im Banburry-Innenmischer oder auf einer Mischwalze hinzufügt, im genannten Temperaturbereich weitere 2 bis 10 Minuten mischt und die fertige Kautschukmischung anschließend als Kautschukfell oder in Form von Streifen auszieht. Bevorzugt können die Polysulfangemische der grafischen Punkte 1 und 2 eingesetzt werden.

### Literatur:

[1] Auto 91/92, Verband der Automobilindustrie e.V., Frankfurt.
[2] ADAC-Motorwelt 11791, 50 (1991).
[3] EP 0 501 227, US 5.227.425
[4] G. Agostini, J. Berg, Th. Materne: New Compound Technology. Oct. 1994, Akron, Ohio/USA.
[5] S. Wolff, U. Görl, M.J. Wang, W. Wolff: Silica based on Tread Compounds - Background and Performance, Vortrag gehalten anläßlich der TYRE TECH '93, Oct. 1993, Basel/Schweiz.
[6] Ph. Cochet, L.B. Barriquand: Precipitated Silica in Tire Tread, Vortrag gehalten anläßlich des ACS Meetings of the Rubber Division, Oct. 1995, Cleveland, Ohio/USA.
[7] S. Wolff: The Influence of Fillers on Rolling Resistance, presented at the 129th Meeting of the Rubber Division American Chemical Society, April 8-11, 1986, New York.
[8] G.W. Marwede, U.G. Eisele, A.J.M. Sumner: Vortrag gehalten anläßlich des ACS Meetings of the Rubber Division, Oct. 1995, Cleveland, Ohio/USA.
[9] U. LeMaitre: The Tire Rolling Resistance, AFCEP/DKG-Meeting, 1993, Mulhouse/France.
[10]S. Wolff: The Role of Rubber-to-Silica Bonds in Reinforcement, presented at the First Franco-German Rubber Symposium, Nov. 14-16, 1985, Obernai/France.
[11]S. Wolff: Silanes in Tire Compounding after Ten Years - Review - Third Annual Meeting and Conference on Tire Science and Technology, The Tire Society, March 28-29, 1984, Akron, Ohio/USA.
[12]U. Görl, A. Hunsche: Advanced investigations into the Silica/Silane Reaction System, Vortrag anläßlich des ACS Meetings, Rubber Division, Oct. 1996, Louisville, Kentucky/USA.
[13]Houben-Weyl: Herstellung von Disulfiden, Methoden der organischen Chemie 1955.

**In den Beispielen verwendete Prüfnormen:**

| | | |
|---|---|---|
| Modul 300 % | MPa | DIN 53 504 |
| Shore-A-Härte | - | DIN 53 505 |
| DIN-Abrieb | mm³ | DIN 53 516 |
| MTS | | DIN 53 513 |
| Mooney-Viskosität | | DIN 53 523/53 524 |

**In den Anwendungsbeispielen werden folgende Chemikalien verwendet:**
- Si 69: Bls(triethoxysllylpropyl)tetrasulfan (Degussa AG).
- Buna VSL 5025 1 HM: Styrol-Butadien-Kautschuk, hergestellt nach dem Lösungspolymerisationsverfahren (Bayer AG).
- Buna CB 11 S: Polybutadienkautschuk (Bayer AG).
- Naftolen ZD: Aromatischer Weichmacher (Chemetal).
- Vulkanox 4020: Verfärbendes Alterungsschutzmittel auf Basis Phenylendiamin (Bayer AG) (6PPD).
- Protector G 35: Ozonschutzwachs (Fuller).
- Vulkacit D: Diphenylguanidin (Bayer AG).
- Vulkacit CZ: Benzothiazyl-2-cyclohexylsulfenamid (Bayer AG).
- Ultrasil VN 3 GR: Gefällte Kieselsäure mit einer BET-Oberfläche von 175 m²/g (Degussa AG).
- Si 266: Bis(triethoxysilylpropyl)disulfan
- Si 266 mod: in Beispiel 3: Sulfankettenverteilung: 57,7 % S_{2;} 31,4 % S₃; 8,3 % S₄; 2,3 % S₅; 0,2 % S₆;

### Beispiel 1: Bestimmung der Sulfankettenverteilung verschiedener Organosilanpolysulfangemische

HPLC-Bestimmung für folgende Zusammensetzungen:

| **Mischung** | **Gewichtsverteilung der Sulfanketten** | | | | | | | | | **Graph. Punkt** |
|---|---|---|---|---|---|---|---|---|---|---|
| **%Si266 / Si69** | **s2** | **s3** | **s4** | **s5** | **s6** | **s7** | **s8** | **s9** | **s10** | **Nr.** |
| 100 / 0 | 99.7 | 0.3 | 0.0 | 0.0 | 0.0 | 0.0 | 0.0 | 0.0 | 0.0 | 1 |
| 90 / 10 | 83.5 | 15.3 | 1.1 | 0.0 | 0.0 | 0.0 | 0.0 | 0.0 | 0.0 | 2 |
| 80 / 20 | 70.2 | 25.1 | 4.1 | 0.6 | 0.0 | 0.0 | 0.0 | 0.0 | 0.0 | 3 |
| 70 / 30 | 57.7 | 31.4 | 8.3 | 2.3 | 0.2 | 0.0 | 0.0 | 0.0 | 0.0 | 4 |
| 60 / 40 | 55.7 | 22.7 | 10.2 | 6.0 | 3.1 | 1.3 | 0.6 | 0.4 | 0.1 | 5 |
| 0 / 100 | 16.2 | 29.9 | 24.0 | 15.2 | 7.9 | 3.8 | 2.1 | 0.6 | 0.2 | 6 |

### Beispiel 2: Ermittlung der Vorvernetzung anhand der Rheometerkurve bei 180 °C

Sämtliche Gemische aus Beispiel 1 wurden in eine Kautschukmischung entsprechend Beispiel 3 bei ca. 140 ºC eingearbeitet unter Verwendung der Mischrezeptur für die Stufen 1 und 2, d.h. ohne Vernetzungssystem. Der Minimum Torque-Wert dieser Rohmischungen wurde anschließend im Rheometer bei 180 ºC bestimmt. Der Anstieg des Torque-Wertes ist als Anzeichen für ein Anscorchverhalten zu sehen (s. Fig. 1).

### Beispiel 3 Vergleich der Rohmischungs- und Rheometerdaten zwischen si 69 und Disulfan-Gemisch in einer PKW-LF-Mischung

• Einfluß der Ausstoßtemperatur -

| **Rezeptur** | **1** | **2** |
|---|---|---|
| **Buna VSL 5025 1 HM** | 96 | 96 |
| **Buna CB 11S** | 30 | 30 |
| **Ultrasil VN 3 Gr.** | 80 | 80 |
| **N 330** | 6,5 | 6,5 |
| **Si 69** | 6,5 | - |
| **Si 266 mod** | - | 6,5 |
| **ZnO RS** | 3 | 3 |
| **Stearinsäure** | 2 | 2 |
| **Naftolen ZD** | 10 | 10 |
| **Vulkanox 4020** | 1,5 | 1,5 |
| **Protector G35** | 1 | 1 |
| **Vulkacit CZ** | 1,7 | 1,7 |
| **Vulkacit D** | 2 | 2 |
| **Schwefel** | 1,4 | 2,1 |

(Si 266 mod: 57,7 % S₂, 31,4 % S₃, 8,3 % S₄, 2,3 % S_{5,} 0,2 % S₆)

### Mischvorschrift:

| | |
|---|---|
| Stufe 1 | |
| Schaufeldrehzahl: 70 Upm | |
| Durchfluß: 80 °C | |

| Mischzeit | |
|---|---|
| 0 - 1' | Buna VSL 5025 1 HM, Buna CB 11S |
| 1 - 2' | ½ Kieselsäure, ½ Si 69 bzw. Si 266 mod, N 330, ZnO, Stearinsäure, Öl |
| 2 - 3' | ½ Kieselsäure, ½ Si 69 bzw. Si 266 mod, N 330, 6PPD, Wachs |
| 3' | Schacht säubern |
| 3 - 3,5' | Mischen und Ausfahren |
| Ausstoßtemperatur: 135 - 145 °C | |
| Zwischenlagerung: 24h / RT | |

| | |
|---|---|
| Stufe 2 | |
| Schaufeldrehzahl: 60 Upm | |
| Durchfluß: 80 °C | |

| Mischzeit | |
|---|---|
| 0 - 2' | Batch Stufe 1 |
| 2' | Ausfahren |
| Ausstoßtemperatur: 135 - 150 °C | |
| Zwischenlagerung: 24h / RT | |

| | |
|---|---|
| Stufe 3 | |
| Schaufeldrehzahl: 30 Upm | |
| Durchfluß: 50 °C | |

| Mischzeit | |
|---|---|
| 0 - 1,5' | Batch Stufe 2, Beschleuniger, Schwefel |
| 1,5' | Ausfahren |
| Ausstoßtemperatur: <110 °C | |

### Mischvorschrift:

| | |
|---|---|
| Stufe 1 | |
| Schaufeldrehzahl: 95 Upm | |
| Durchfluß: 80 °C | |

| Mischzeit | |
|---|---|
| 0 - 1' | Buna VSL 5025 1 HM, Buna CB 11S |
| 1 - 2' | ½ Kieselsäure, ½ Si 69 bzw. Si 266 mod, N 330, ZnO, Stearinsäure, Öl |
| 2 - 3' | ½ Kieselsäure, ½ Si 69 bzw. Si 266 mod, N 330, 6PPD, Wachs |
| 3' | Schacht säubern |
| 3 - 3,5' | Mischen und Ausfahren |
| Ausstoßtemperatur: 155 - 165 °C | |
| Zwischenlagerung: 24h / RT | |

| | |
|---|---|
| Stufe 2 | |
| Schaufeldrehzahl: 60 Upm | |
| Durchfluß: 80 °C | |

| Mischzeit | |
|---|---|
| 0 - 2' | Batch Stufe 1 |
| 2' | Ausfahren |
| Ausstoßtemperatur: 135 - 145 °C | |
| Zwischenlagerung: 24h / RT | |

| | |
|---|---|
| Stufe 3 | |
| Schaufeldrehzahl: 30 Upm | |
| Durchfluß: 50 °C | |

| Mischzeit | |
|---|---|
| 0 - 1,5' | Batch Stufe 2, Beschleuniger, Schwefel |
| 1,5' | Ausfahren |
| Ausstoßtemperatur: <110 °C | |

### Mischvorschrift:

| | |
|---|---|
| Stufe 1 | |
| Schaufeldrehzahl: 115 Upm | |
| Durchfluß: 95 °C | |

| Mischzeit | |
|---|---|
| 0 - 1' | Buna VSL 5025 1 HM, Buna CB 11S |
| 1 - 2' | ½ Kieselsäure, ½ Si 69 bzw. Si 266 mod, N 330, ZnO, Stearinsäure, Öl |
| 2 - 3' | ½ Kieselsäure, ½ Si 69 bzw. Si 266 mod, N 330, 6PPD, Wachs |
| 3' | Schacht säubern |
| 3 - 3,5' | Mischen und Ausfahren |
| Ausstoßtemperatur: 175 - 185 °C | |
| Zwischenlagerung: 24h / RT | |

| | |
|---|---|
| Stufe 2 | |
| Schaufeldrehzahl: 60 Upm | |
| Durchfluß: 80 °C | |

| Mischzeit | |
|---|---|
| 0 - 2' | Batch Stufe 1 |
| 2' | Ausfahren |
| Ausstoßtemperatur: 135 - 145 °C | |
| Zwischenlagerung: 24h / RT | |

| | |
|---|---|
| Stufe 3 | |
| Schaufeldrehzahl: 30 Upm | |
| Durchfluß: 50 °C | |

| Mischzeit | |
|---|---|
| 0 - 1,5' | Batch Stufe 2, Beschleuniger, Schwefel |
| 1,5' | Ausfahren |
| Ausstoßtemperatur: <110 °C | |

| | | |
|---|---|---|
| Vulkanisatdaten: 165 °C / t_{95%} | | |

| | **Si 69 (Ausstoßtemperatur 140 °C)** | **Si 266 mod (Ausstoßtemperatur 180 °C)** |
|---|---|---|
| Modul 300% Mpa | 10,4 | 11,8 |
| DIN Abrieb mm³ | 64 | 61 |
| tan δ 0 °C | 0,411 | 0,473 |
| tan δ 60 °C | 0,155 | 0,160 |
| Shore-A-Härte | 73 | 70 |

Aufgrund der bei Si 266 mod möglichen hohen Ausstoßtemperatur von 180 °C ohne Gefahr des Anscorchens, können die hierbei erhaltenen Vulkanisatdaten mit denen von Si 69 bei 140 °C Ausstoßtemperatur verglichen werden. Si 266 mod zeichnet sich hierbei durch besonders gute tan δ-Werte bei 0 °C aus, die sich in besseren Naßrutscheigenschaften des Reifens äußern können. 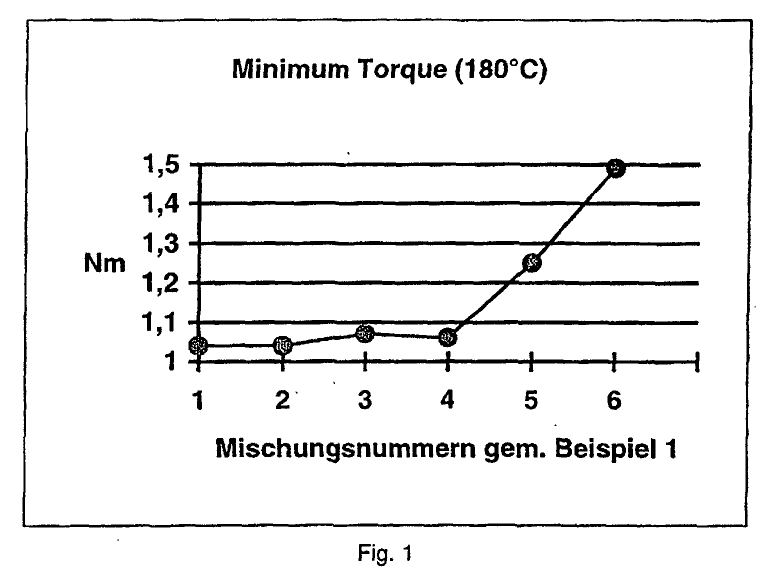 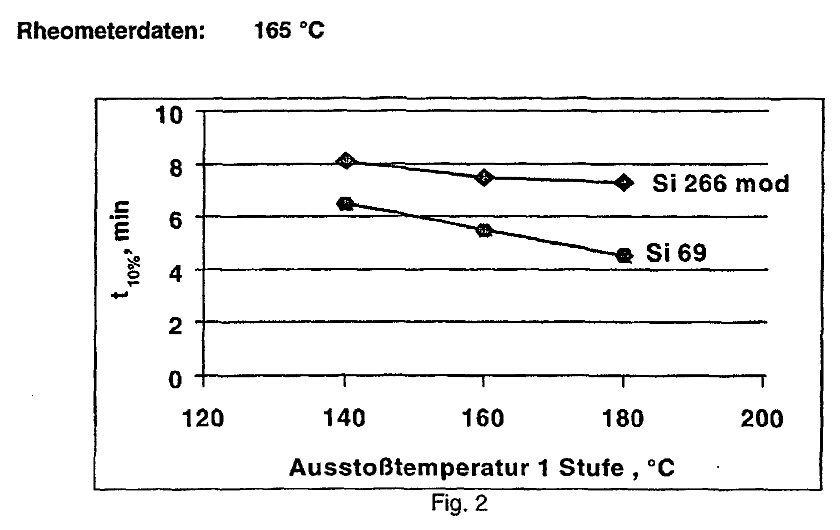 Si 266 mod zeigt bei allen Mischtemperaturen das deutlich bessere Anscorchverhalten. 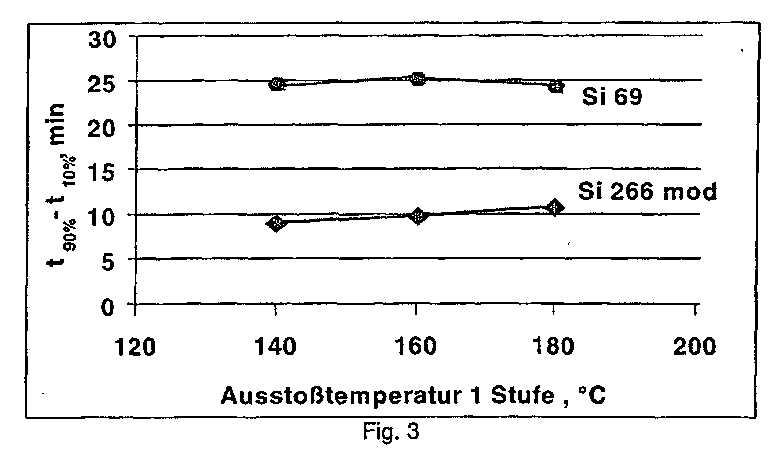 Si 266 mod zeigt die deutlich günstigere Vulkanisationszeit im Vergleich zu Si 69.

### Rohmischungsdaten

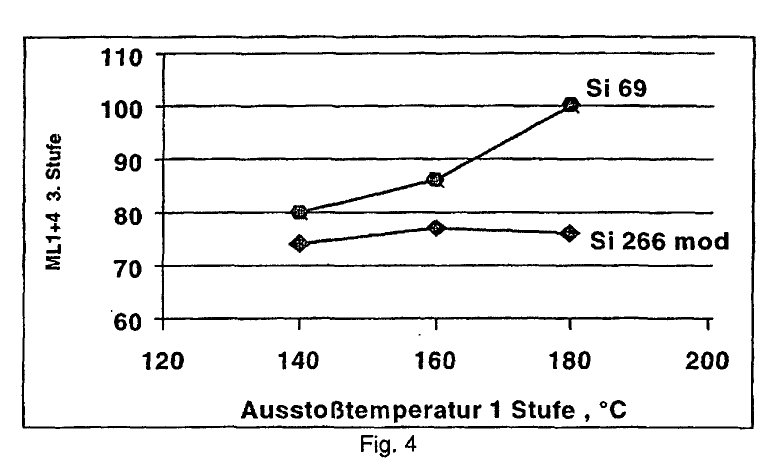

Si 266 mod zeigt auch bei hohen Mischtemperaturen kein Anscorchverhalten und ist daher deutlich günstiger im Verarbeitungsverhalten.

### Spritzgeschwindigkeit

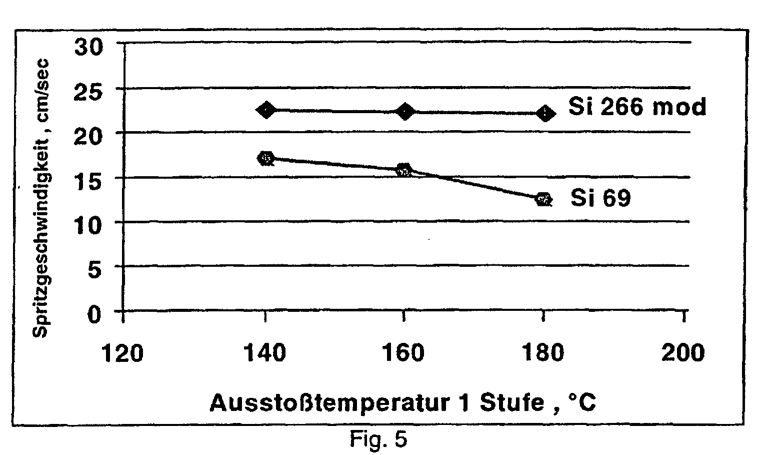

Si 266 mod besitzt deutliche Vorteile in der Spritzgeschwindigkeit.

## Patentansprüche

1. Gemische aus Organosilanpolysulfanen gemäß der allgemeinen Formel
(RO)₃Si(CH₂)ₓ S-S_{z} - S (CH₂)ₓ Si(OR)₃ (I)
in der bedeuten
R = Alkyl, geradkettig oder verzweigt mit 1-8 C-Atomen, insbesondere 1 - 3 C-Atomen
x:= eine ganze Zahl von 1-8
z:= 0 bis 6,
wobei der Anteil der Polysulfane, bei denen z eine ganze Zahl von 2 bis 6 bedeutet, den Anteil von 20 Gew.-% in dem Gemisch nicht überschreitet, die Summe der Anteile an Polysulfanen, in denen z = 0 und z = 1 ist, sich auf ≥ 80 Gew.-% beläuft und der Anteil der Polysulfane mit z = 0 einen Wert von 80 Gew.-% nicht erreicht.

2. Gemische gemäß Anspruch 1,
**dadurch gekennzeichnet,**
**daß** in den Gemischen die Anteile der Organosilanpolysulfane folgende Werte annehmen:
z = 0 58 bis < 80 %
z = 1 > 0 bis 32 %, wobei die Summe dieser Verbindungen ≥ 80 % beträgt,
z = 2 bis 6 ≤ 20 %.

3. Verfahren zur Herstellung von mit Schwefel, und/oder Schwefelspendern und Beschleuniger(n) vulkanisierten Kautschukmischungen, enthaltend einen oder mehrere natürliche oder künstliche Kautschuke, helle oxidische (silikatische) Füllstoffe, sowie gegebenenfalls Ruß und weitere übliche Bestandteile,
**dadurch gekennzeichnet,**
**daß** man die Kautschukkomponente(n), die Gemische gemäß den Ansprüchen 1 oder 2, den silikatischen Füllstoff und den gegebenenfalls vorhandenen Ruß sowie gegebenenfalls einen Weichmacher, Alterungsschutzmittel und Aktivatoren in einem Knetgerät, gegebenenfalls einem Banbury-Innenmischer, bei einer Temperatur von 160 bis 200 ° C 3 bis 15 Minuten lang in einer Stufe oder mehrstufig knetet, anschließend bei 60 bis 120 º C Vulkanisationshilfsmittel, entweder im Banbury-Innenmischer oder auf einer Mischwalze hinzufügt, im genannten Temperaturbereich weitere 2 bis 10 Minuten mischt und die fertige Kautschukmischung anschließend als Kautschukfell oder in Form von Streifen auszieht.

4. Verfahren gemäß Anspruch 3,
**dadurch gekennzeichnet,**
**daß** man als helle oxidische Füllstoffe Naturfüllstoffe (Clays, Kieselkreiden) und/oder gefällte Kieselsäure oder Silikate in Mengen von 10 bis 200 Teilen, bevorzugt 25 bis 80 Teilen, bezogen auf 100 Teile Polymer, einsetzt.

5. Verfahren gemäß den Ansprüchen 3 und 4
**dadurch gekennzeichnet,**
**daß** man Füllstoffe mit einer BET-Oberfläche (ISO 5794/1D) von 1 bis 700 m²/g einsetzt, wobei die gefällten Kieselsäuren und Silikate noch eine DBP-Zahl (ASTM D 2414) von 150 bis 3.00 ml/100 g besitzen.

6. Verfahren gemäß den Ansprüchen 3 bis 5,
**dadurch gekennzeichnet,**
**daß** man einen mit der in Anspruch 1 beschriebenen Organosilanpolysulfangemischen vermischten und/oder vorbehandelten oxidischen Füllstoff einsetzt, wobei die eingesetzte Menge der Gemische gemäß Anspruch 1 pro 100 Teile Füllstoff sich auf 0,5 bis 30 Teile beläuft.

7. Laufflächenmischungen für Reifen mit hohem Kieselsäureanteil,
**dadurch gekennzeichnet,**
**daß** sie 4 bis 10 Teile der Gemische gemäß den Ansprüchen 1 oder 2 enthalten, bezogen auf 100 Teile Füllstoff.

8. Verfahren zur Herstellung von mit Schwefel, und/oder Schwefelspendern und Beschleuniger(n) vulkanisierten Kautschukmischungen, enthaltend einen oder mehrere natürliche oder künstliche Kautschuke, helle oxidische (silikatische) Füllstoffe, sowie gegebenenfalls Ruß und weitere übliche Bestandteile,
**dadurch gekennzeichnet,**
**daß** man die Kautschukkomponente(n), die Gemische gemäß der allgemeinen Formel
(RO)₃Si(CH₂)ₓ S-S_{z} - S (CH₂)ₓ Si(OR)₃
in der bedeuten
R = Alkyl, geradkettig oder verzweigt mit 1-8 C-Atomen, insbesondere 1 - 3 C-Atomen
x:= eine ganze Zahl von 1-8
z:= 0 bis 6,
wobei der Anteil der Polysulfane, bei denen z eine ganze Zahl von 2 bis 6 bedeutet, den Anteil von 20 Gew.-% in dem Gemisch nicht überschreitet, und der Anteil der Polysulfane mit z = 0 einen Wert ≥ 80 Gew.-% erreicht, den silikatischen Füllstoff und den gegebenenfalls vorhandenen Ruß sowie gegebenenfalls einen Weichmacher, Alterungsschutzmittel und Aktivatoren in einem Knetgerät, gegebenenfalls einem Banbury-Innenmischer, bei einer Temperatur von 160 bis 200 ° C 3 bis 15 Minuten lang in einer Stufe oder mehrstufig knetet, anschließend bei 60 bis 120 º C Vulkanisationshilfsmittel, entweder im Banbury-Innenmischer oder auf einer Mischwalze hinzufügt, im genannten Temperaturbereich weitere 2 bis 10 Minuten mischt und die fertige Kautschukmischung anschließend als Kautschukfell oder in Form von Streifen auszieht.

## Claims

1. Mixtures of organosilane-polysulfanes according to the general formula
(RO)₃Si(CH₂)ₓ S-S_{z} - S (CH₂)ₓ Si(OR)₃ (I)
in which
R = alkyl, straight-chain or branched, having 1-8 C atoms, in particular 1 - 3 C atoms
x:= an integer from 1-8
z:= 0 to 6,
wherein the content of polysulfanes in which z denotes an integer from 2 to 6 does not exceed the content of 20 wt.% in the mixture, the sum of the contents of polysulfanes in which z = 0 and z = 1 is ≥ 80 wt.% and the content of polysulfanes where z = 0 does not reach a value of 80 wt.%.

2. Mixtures according to claim 1,
**characterized in that**
in the mixtures the contents of organosilane-polysulfanes assume the following values:
z = 0 58 to < 80 %
z = 1 > 0 to 32 %, wherein the sum of these compounds is ≥ 80 %,
z = 2 to 6 ≤ 20 %.

3. Process for the preparation of rubber mixtures which are vulcanized with sulfur, and/or sulfur donors and accelerator(s) and comprise one or more naturally occurring or synthetic rubbers, light-coloured oxidic (silicatic) fillers and optionally carbon black and further conventional constituents,
**characterized in that**
the rubber component(s), the mixtures according to claims 1 or 2, the silicatic filler and the carbon black optionally present and optionally a plasticizer, anti-ageing agents and activators are kneaded in a kneading apparatus, optionally a Banbury internal mixer, at a temperature of 160 to 200 ° C for 3 to 15 minutes in one stage or several stages, vulcanization auxiliaries are then added at 60 to 120 ° C, either in a Banbury internal mixer or on a mixing roll, mixing is carried out for a further 2 to 10 minutes in the temperature range mentioned, and the finished rubber mixture is then drawn out as rubber sheet or in the form of strips.

4. Process according to claim 3,
**characterized in that**
natural fillers (clays, silica chalks) and/or precipitated silica or silicates are employed as the light-coloured oxidic fillers in amounts of 10 to 200 parts, preferably 25 to 80 parts, based on 100 parts of polymer.

5. Process according to claim 3 and 4,
**characterized in that**
fillers with a BET surface area (ISO 5794/1D) of 1 to 700 m²/g are employed, the precipitated silicas and silicates also having a DBP number (ASTM D 2414) of 150 to 300 ml/100 g.

6. Process according to claims 3 to 5,
**characterized in that**
an oxidic filler mixed and/or pretreated with the organosilane-polysulfane mixtures described in claim 1 is employed, the amount of mixtures according to claim 1 employed per 100 parts of filler being 0.5 to 30 parts.

7. Tread mixtures for tyres with a high silica content,
**characterized in that**
they comprise 4 to 10 parts of the mixtures according to claims 1 or 2, based on 100 parts of filler.

8. Process for the preparation of rubber mixtures which are vulcanized with sulfur, and/or sulfur donors and accelerator(s) and comprise one or more naturally occurring or synthetic rubbers, light-coloured oxidic (silicatic) fillers, and optionally carbon black and further conventional constituents,
**characterized in that**
the rubber components, the mixtures according to the general formula
(RO)₃Si(CH₂)ₓ S-S_{z} - S (CH₂)ₓ Si(OR)₃
in which
R = alkyl, straight-chain or branched, having 1-8 C atoms, in particular 1 - 3 C atoms
x:= an integer from 1-8
z:= 0 to 6,
wherein the content of polysulfanes in which z denotes an integer from 2 to 6 does not exceed the content of 20 wt.% in the mixture, and the content of polysulfanes where z = 0 reaches a value of ≥ 80 wt.%, the silicatic filler and the carbon black optionally present and optionally a plasticizer, anti-ageing agents and activators are kneaded in a kneading apparatus, optionally a Banbury internal mixer, at a temperature of 160 to 200 ° C for 3 to 15 minutes in one stage or in several stages, vulcanization auxiliaries are then added at 60 to 120 ° C, either in a Banbury internal mixer or on a mixing roll, mixing is carried out for a further 2 to 10 minutes in the temperature range mentioned, and the finished rubber mixture is than drawn out as rubber sheet or in the form of strips.

## Revendications

1. Mélange d'organosilanes polysulfanes selon la formule générale
(RO)₃Si(CH₂)ₓS-S_{z} - S(CH₂)ₓ Si(OR)₃
dans laquelle
R = alkyle, à chaîne droite ou ramifiée, comportant 1 à 8 atomes de carbone, en particulier 1 à 3 atomes de carbone,
x est un nombre entier allant de 1 à 8,
z vaut de 0 à 6,
la proportion des polysulfanes dans lesquelles z représente un nombre entier allant de 2 à 6 ne dépassant pas une valeur de 20 % en poids dans le mélange, la somme des proportions de polysulfanes dans lesquels z = 0 et z = 1 étant supérieure ou égale à 80% en poids, et la proportion des polysulfanes dans lesquels z = O atteignant une valeur supérieure ou égale à 80 % en poids.

2. Mélanges selon la revendication 1,
**caractérisé en ce que**
dans les mélanges les proportions des organosilanes polysulfanes prennent les valeurs suivantes :
z = 0 58 à < 80 %
z = 1 > 0 à 32 %, la somme de ces composés étant supérieure ou égale à 80 %,
z = 2 à 6 ≤ 20 %.

3. Procédé de production de mélanges de caoutchouc vulcanisés avec du soufre ou des donneurs de soufre ayant un ou plusieurs accélérateurs, contenant un ou plusieurs caoutchoucs naturels ou synthétiques, des charges claires contenant des oxydes (silicatées) ainsi que le cas échéant du noir de fumée et d'autres constituants habituels,
**caractérisé en ce qu'**
on pétrit les mélanges selon les revendications 1 ou 2, la charge silicatée et le noir de fumée éventuellement présent ainsi que le cas échéant un plastifiant, un agent de protection contre le vieillissement et les activateurs dans une pétrisseuse, le cas échéant un mélange interne de Banbury, à une température de 160 à 200°C pendant 3 à 15 minutes en une étape ou en plusieurs étapes, puis on ajoute entre 60 et 120°C des adjuvants de vulcanisation, soit dans le mélangeur interne de Banbury, soit sur un cylindre de mélange, on mélange dans l'intervalle de température mentionnée pendant encore 2 à 10 minutes, puis on extrait le mélange de caoutchouc prêt à l'emploi sous forme de peau de caoutchouc ou sous forme de rubans.

4. Procédé selon la revendication 3,
**caractérisé en ce qu'**
on utilise comme charge claire contenant des oxydes des charges naturelles (argiles, craies siliciques) et/ou de l'acide silicique précipité ou des silicates à des quantités de 100 à 200 parties, de préférence de 25 à 80 parties, pour 100 parties de polymère.

5. Procédé selon les revendications 3 et 4,
**caractérisé en ce qu'**
on utilise des charges ayant une surface BET (ISO 5794/1D) de 1 à 700 m²/g, les acides siliciques et silicates précipités possédant encore un indice DBP (ASTM D 2414) de 150 à 300 ml/100 g.

6. Procédé selon les revendications 1 à 5,
**caractérisé en ce qu'**
on utilise une charge mélangée avec des mélanges d'organopolysilanes polysulfanes décrits dans la revendication 1 et/ou une charge contenant des oxydes prétraités, la quantité utilisée de mélanges selon la revendication 1 s'élevant à 0,5 à 30 parties pour 100 parties de charge.

7. Mélanges de surface de roulement pour pneus à haute proportion d'acide silicique,
**caractérisés en ce qu'**
ils contiennent de 4 à 10 parties des mélanges selon les revendications 1 ou 2, pour 100 parties de charge.

8. Procédé de production de mélanges de caoutchouc vulcanisés avec du soufre et/ou des donneurs de soufre et un ou plusieurs accélérateurs, contenant un ou plusieurs caoutchoucs naturels ou synthétiques, des charges claires contenant des oxydes (silicatées), ainsi que le cas échéant du noir de fumée et d'autres constituants habituels,
**caractérisé en ce qu'**
- on pétrit le ou les composants de caoutchouc, les mélanges selon la formule générale
(RO)₃Si(CH₂)ₓS-S_{z} - S(CH₂)ₓ Si(OR)₃
dans laquelle
R = alkyle, à chaîne droite ou ramifiée, comportant 1 à 8 atomes de carbone, en particulier 1 à 3 atomes de carbone,
x est un nombre entier allant de 1 à 8,
z vaut de 0 à 6,
la proportion des polysulfanes dans lesquels z représente un nombre entier allant de 2 à 6 ne dépassant pas une valeur de 20 % en poids dans le mélange, et la proportion des polysulfanes dans lesquelles z = 0 atteignant une valeur supérieure ou égale à 80 % en poids,
- avec la charge silicatée et le noir de fumée éventuellement présent ainsi que le cas échéant un plastifiant, un agent de protection contre le vieillissement et des activateurs dans une pétrisseuse, le cas échéant un mélangeur interne de Banbury, à une température de 160 à 200°C pendant 3 à 15 minutes en une étape ou en plusieurs étapes,
- puis on ajoute entre 60 et 120°C des adjuvants de vulcanisation, soit dans le mélangeur interne de Banbury soit sur un cylindre de mélange,
- on mélange dans l'intervalle de température mentionné pendant encore 2 à 10 minutes puis on extrait le mélange de caoutchouc prêt à l'emploi sous forme de peau de caoutchouc ou sous forme de rubans.
